# FASCICULE DE BREVET EUROPEEN

(11) **EP 3 863 894 B1**
(45) Date de publication et mention de la délivrance du brevet: **14.09.2022**
(21) Numéro de dépôt: 19783030.0
(22) Date de dépôt: 08.10.2019
(51) Int. Cl.: B60R 22/34

(54) **SEMELLE POUR ENROULEUR DE CEINTURE DE SÉCURITÉ ET VÉHICULE AUTOMOBILE COMPORTANT UN TEL ENROULEUR**
GRUNDPLATTE FÜR EINEN SICHERHEITSGURTAUFROLLER UND KRAFTFAHRZEUG MIT EINEM SOLCHEN AUFROLLER
SOLE FOR SAFETY BELT RETRACTOR AND VEHICLE AUTOMOBILE HAVING SUCH RETRACTOR

(30) Priorité: 08.10.2018 FR 1859295
(43) Date de publication de la demande: 18.08.2021
(73) Titulaire: Renault s.a.s, 92100 Boulogne Billancourt (FR)
(72) Inventeur: BROCHOT, Marc, 78180 MONTIGNY LE BRETONNEUX (FR)
(74) Mandataire: Renault Group
(86) Numéro de dépôt international: PCT/EP2019/077155
(87) Numéro de publication internationale: WO 2020/074472

(56) Documents cités:
- DE-A1- 3 318 740
- DE-A1- 19 510 603
- DE-A1-102013 202 547
- FR-A1- 2 932 752
- FR-A1- 2 993 216
- GB-A- 2 020 963

## Description

### DOMAINE TECHNIQUE AUQUEL SE RAPPORTE L'INVENTION

La présente invention concerne de manière générale le domaine des véhicules automobiles.

Elle concerne plus particulièrement une semelle d'enrouleur de ceinture de sécurité comportant :
- une platine présentant une face adaptée à être rapportée contre une partie de châssis de véhicule automobile,
- un élément de fixation, tel qu'un écrou, prévu pour permettre la fixation de la platine à ladite partie de châssis de véhicule automobile, et
- au moins un crochet comprenant un jambage qui s'étend en saillie de ladite face de la platine et qui porte une dent d'accrochage de façon à ce que cette dernière soit située à distance de la platine.

L'invention concerne également un enrouleur de ceinture de sécurité comportant une telle semelle, et un véhicule automobile comportant un tel enrouleur.

### ARRIERE-PLAN TECHNOLOGIQUE

L'assemblage des composants d'un véhicule automobile en usine de montage requiert de nombreuses opérations successives, dont certaines sont particulièrement fastidieuses à mettre en œuvre car devant être réalisées dans des zones difficiles d'accès ou très encombrées. Parmi ces opérations, l'installation d'un enrouleur de ceinture de sécurité peut être compliquée pour l'opérateur.

On connaît par exemple un véhicule automobile comportant, à l'arrière de sa banquette arrière, un plateau sensiblement horizontal sur lequel l'enrouleur doit être vissé par une vis rapportée non pas par le dessus du plateau, mais par le dessous de ce plateau.

L'opération de vissage de l'enrouleur par le dessous du plateau consiste alors à placer l'enrouleur sur le dessus du plateau, puis à engager une vis au travers d'un orifice prévue dans le plateau, par le dessous, de façon à pouvoir la visser dans un écrou de l'enrouleur.

Le problème majeur rencontré par l'opérateur est que, lorsque la vis vient s'appuyer contre l'écrou, elle provoque le soulèvement de l'enrouleur, ce qui complique la tâche de l'opérateur et qui empêche la fixation de l'enrouleur à l'exacte position souhaitée.

Pour aider l'opérateur, il est alors connu d'équiper l'enrouleur de deux crochets de pré-montage adaptés à s'accrocher au plateau pendant l'opération de vissage. Chaque crochet se présente sous la forme d'une tige de largeur et d'épaisseur constantes, repliée à son extrémité pour former une dent d'accrochage.

Le plateau comporte en correspondance deux ouvertures rectangulaires au travers desquelles les crochets de pré-montage peuvent être engagés de façon à ce que leurs dents d'accrochage puissent se glisser sous le plateau.

De cette manière, lorsque la vis vient s'appuyer contre l'écrou de l'enrouleur, les crochets de pré-montage empêchent l'enrouleur de se soulever, ce qui facilite la tâche de l'opérateur.

L'inconvénient de cette solution est que lors du vissage de la vis dans l'enrouleur, on constate souvent que l'enrouleur se décale angulairement par rapport à la position souhaitée.

Un autre inconvénient de cette solution est que l'installation de l'enrouleur sur le plateau requiert, de façon contraignante, deux mouvements successifs, à savoir un mouvement vertical pour enfiler les crochets de pré-montage au travers des ouvertures rectangulaires du plateau, et un mouvement horizontal de coulissement de l'enrouleur sur le plateau de façon à ce que les dents d'accrochage viennent se placer sous le plateau. Le document DE102013202547 montre une semelle d'enrouleur de ceinture de sécurité selon le préambule de la revendication 1.

### OBJET DE L'INVENTION

Afin de remédier aux inconvénients précités de l'état de la technique, la présente invention propose une semelle d'enrouleur de ceinture de sécurité telle que définie dans l'introduction, dans laquelle la liaison entre la platine et le jambage s'étend sur une longueur supérieure ou égale à la plus grande longueur du crochet au niveau de la dent d'accrochage (ladite plus grande longueur étant mesurée selon un axe parallèle à l'axe selon lequel est mesurée la longueur de la liaison entre la platine et le jambage).

Ainsi, grâce à l'invention, il est possible de faire en sorte que les dimensions de chaque ouverture rectangulaire prévue dans le plateau soient égales, au jeu de montage près, à la longueur et à l'épaisseur du jambage au niveau de sa liaison avec la platine.

De cette manière, lors du vissage de l'enrouleur sur le plateau, le jambage se retrouve bloqué dans l'ouverture rectangulaire sur chacun de ses quatre côtés, ce qui assure un blocage angulaire de la platine par rapport au plateau.

Il est ainsi plus facile pour l'opérateur d'installer l'enrouleur exactement à la position souhaitée et selon l'orientation prévue.

D'autres caractéristiques avantageuses et non limitatives de la semelle d'enrouleur de ceinture de sécurité conforme à l'invention sont les suivantes :
- la longueur de la liaison entre la platine et le jambage est égale, à 10% près, à la plus grande longueur du crochet au niveau de la dent d'accrochage ;
- la liaison entre la platine et le jambage s'étend sur une épaisseur supérieure ou égale à la plus grande épaisseur du crochet au niveau de la dent d'accrochage ;
- le jambage est délimité entre deux bords, dont l'un au moins est incliné par rapport à l'autre de telle sorte que le jambage s'élargit depuis la dent d'accrochage vers la platine ;
- une partie au moins du bord qui est incliné s'étend de façon rectiligne ;
- il est prévu deux crochets identiques, situés en parallèle l'un de l'autre, de part et d'autre de l'élément de fixation ;
- chaque crochet vient de formation d'une seule pièce avec la platine, par découpe et pliage d'un feuillard métallique ;
- ledit élément de fixation est un écrou, qui est préférentiellement soudé sur la platine.

L'invention concerne aussi un enrouleur comportant un mécanisme d'enroulement de ceinture de sécurité qui est logé dans un boîtier comprenant une semelle telle que précité.

Elle concerne également un véhicule automobile comportant :
- un châssis qui est équipé d'un plateau présentant un orifice et au moins une ouverture,
- un enrouleur tel que précité, dont le crochet de la semelle est engagé au travers de l'ouverture du plateau, et
- un élément de blocage enfilé au travers de l'orifice du plateau et coopérant avec l'élément de fixation de la semelle de l'enrouleur de façon à fixer la semelle au plateau,

l'ouverture présente une longueur égale, au jeu de montage près, à la longueur de la liaison entre la platine et le jambage de la semelle.

Préférentiellement, le véhicule automobile comportant une rangée de sièges avant et une rangée de sièges arrière, le plateau est prévu à l'arrière de la rangée de sièges arrière.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une partie arrière d'un châssis de véhicule automobile ;
- la figure 2 est une vue schématique en perspective d'un enrouleur fixé sur un plateau du châssis de la figure 1 ;
- la figure 3 est une vue schématique de dessus des moyens permettant le montage de l'enrouleur sur le plateau de la figure 2 ;
- la figure 4 est une vue schématique de dessous d'un crochet permettant le montage de l'enrouleur sur le plateau de la figure 2 ;
- la figure 5 est une vue schématique de dessous des moyens permettant le montage de l'enrouleur sur le plateau de la figure 2 ;
- les figures 6 et 7 sont des vues schématiques en perspective et de côté de la platine et des crochets de l'enrouleur de la figure 2.

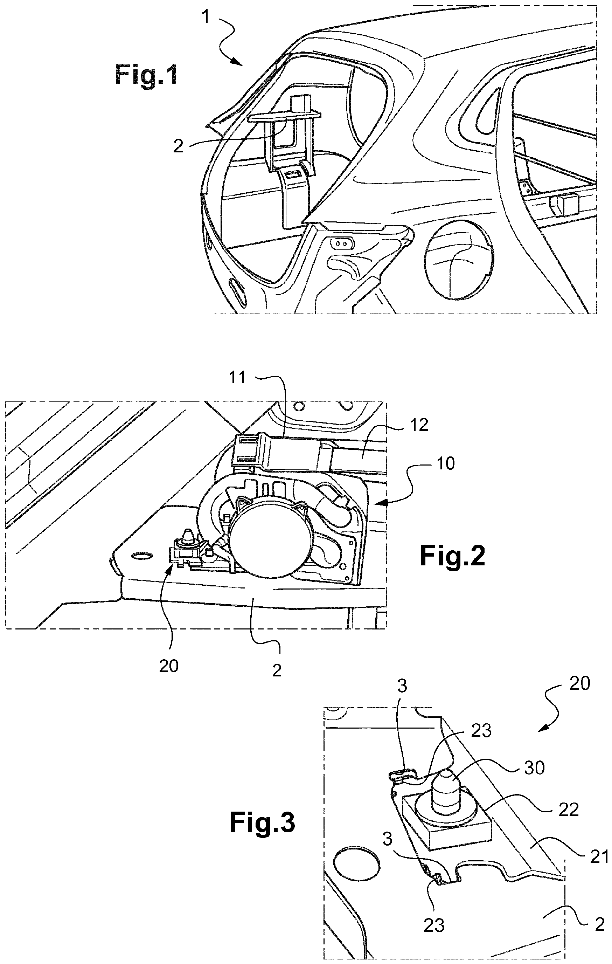

Sur la figure 1, on a représenté une partie arrière d'un châssis 1 d'un véhicule automobile (ici une voiture).

Dans la suite de cette description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné vers le coffre.

De la même manière, les termes «inférieur » (ou « bas ») et «supérieur » (ou « haut ») seront utilisés par rapport à ce véhicule automobile, le côté inférieur d'un élément désignant la partie de cet élément qui est tournée du côté du plancher du véhicule et le côté supérieur désignant la partie de cet élément qui est tournée du côté du toit.

Le châssis 1 est ici de type monocoque. Il délimite classiquement un habitacle destiné à recevoir deux rangées de sièges, dont une rangée avant comportant un siège conducteur et un siège passager, et une rangée arrière comportant par exemple une banquette multiplace.

Comme cela apparaît sur la figure 1, le châssis comporte en particulier un plateau 2 qui s'étend de façon sensiblement horizontale (lorsque le véhicule automobile est posé par ses roues sur une route horizontale).

Ce plateau 2 est situé à l'arrière de la banquette arrière, de façon à pouvoir recevoir et supporter un enrouleur de ceinture de sécurité utilisable par un passager situé sur la banquette arrière.

Cet enrouleur 10 comporte un mécanisme d'enroulement pour une ceinture de sécurité 12, et un boîtier 11 qui loge ce mécanisme d'enroulement et qui présente une fente au travers de laquelle émerge la ceinture de sécurité 12 (voir figure 2).

Ce boîtier 11 comporte différentes parois, dont une paroi inférieure appelée « semelle 20 ».

C'est par cette semelle 20 que l'enrouleur 10 est fixé au plateau 2 du châssis 1 du véhicule automobile.

Pour cela, comme le montrent les figures 2 et 3, la semelle 20 comporte principalement trois éléments, à savoir une platine 21, un élément de fixation 22, et des moyens de crochetage.

La platine 21 est ici une paroi plane qui ferme le bas du boîtier 11 de l'enrouleur 10. Elle présente une face inférieure plane prévue pour être rapportée en appui contre la face supérieure plane du plateau 2.

Cette platine 21 est ici réalisée en matériau métallique, par exemple en acier.

Elle présente une partie qui déborde à l'arrière du reste du boîtier 11 et qui est mise à profit pour fixer l'enrouleur 10 au plateau 2.

La partie de fixation 22 est quant à elle prévue pour assurer la fixation rigide et solide de l'enrouleur 10 au plateau 2.

Elle est prévue de sorte qu'en cas d'accident, lorsque la ceinture de sécurité retient un passager, l'enrouleur 10 reste solidement attaché au plateau 2.

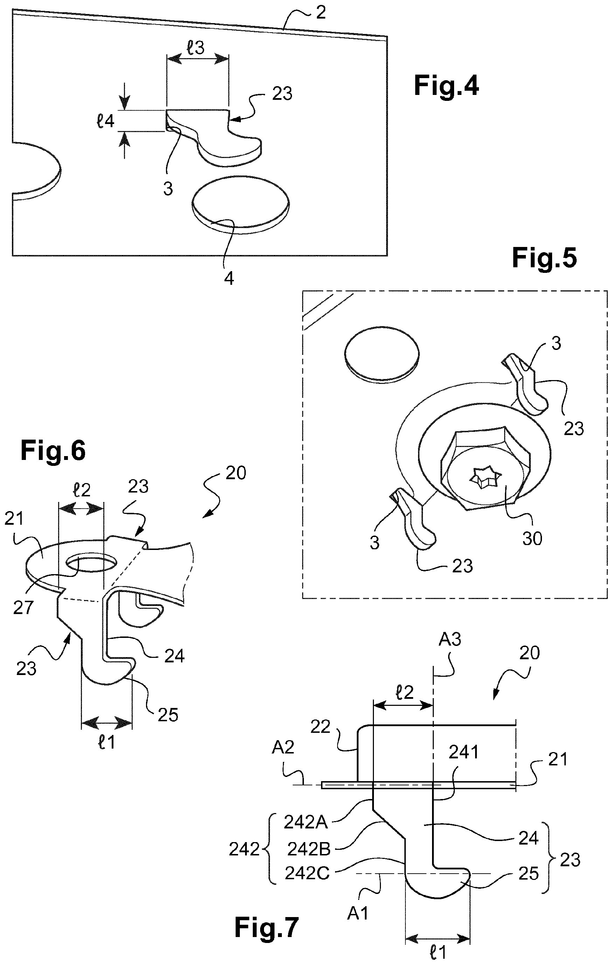

Ici, cette partie de fixation se présente sous la forme d'un écrou 22 soudé sur la platine 21, au dessus d'un orifice 27 prévu dans la platine 21 (voir figure 6, qui représente la platine 21 avant que l'écrou 22 y soit soudé).

Sur les figures 2 et 3, on observe que l'écrou 22 présente ici une forme externe parallélépipédique carrée.

Cet écrou 22 présente un alésage traversant taraudé. Il est conçu pour recevoir par le dessous la tige filetée d'une vis de fixation 30.

Comme le montrent les figures 4 à 6, cette vis de fixation 30 est plus précisément prévue pour être engagée au travers d'un orifice 4 circulaire prévu dans le plateau 2 et de l'orifice 27 prévu dans la platine 21 de façon à ce que sa tige filetée puisse se visser dans l'écrou 22 et que sa tête puisse s'appliquer contre la face inférieure du plateau 2.

Les moyens de crochetage de la semelle 20 sur le plateau 2 sont quant à eux prévus pour permettre un pré-montage de l'enrouleur 10 sur le plateau 2 dans la position souhaitée, avant que l'opérateur n'ait vissé la vis de fixation 30 dans l'écrou 22.

Ces moyens de crochetage comportent au moins un crochet 23 prévu pour se crocheter sur le plateau 2. Ils comportent de préférence au moins deux crochets 23 distincts.

Comme le montre la figure 6, les moyens de crochetage comportent ici exactement deux crochets 23 identiques, situés de part et d'autre de l'orifice 27, en parallèle l'un de l'autre (les crochets 23 sont donc orientés de la même façon sur la platine 21).

Ces crochets 23 sont adaptés à traverser deux ouvertures rectangulaires 3 (voir figure 5) prévues dans le plateau 2.

Comme le montrent les figures 6 et 7, chaque crochet 23 comprend un jambage 24 qui s'étend à partir du bord de la platine 21, orthogonalement par rapport à celle-ci, vers le bas, et une dent d'accrochage 25 qui s'étend en saillie de l'extrémité basse du jambage 24, orthogonalement par rapport à celui-ci, vers l'avant.

Selon une caractéristique particulièrement avantageuse de l'invention, la liaison entre la platine 21 et le jambage 24 s'étend sur une longueur ℓ2 (voir figure 7) qui est supérieure ou égale à la plus grande longueur ℓ1 du crochet 23 au niveau de la dent d'accrochage 25 (cette plus grande longueur ℓ1 étant mesurée selon un axe A1 parallèle à l'axe A2 de la liaison entre la platine 21 et le jambage 24).

En d'autres termes, si on considère la direction d'engagement du crochet 23 au travers de l'ouverture rectangulaire 3 correspondante du plateau 2, la section du crochet 23 (dans un plan orthogonal à la direction d'engagement) présente des dimensions qui varient et qui sont notamment plus grandes (ou égales) au niveau de la liaison entre la platine 21 et le jambage 24 qu'au niveau de la dent d'accrochage 25.

Préférentiellement, la longueur ℓ2 de la liaison entre la platine 21 et le jambage 24 est égale, à 10% près, à la plus grande longueur ℓ1 du crochet 23 au niveau de la dent d'accrochage 25.

Préférentiellement aussi, chaque ouverture rectangulaire 3 prévue dans le plateau présente une longueur ℓ3 et une largeur ℓ4 respectivement égales, au jeu de montage près, à la longueur ℓ2 de la liaison entre la platine 21 et le jambage 24 et à l'épaisseur du crochet 23.

Le jeu de montage est prévu pour permettre un montage sans force (mais ajusté) du crochet 23 dans son ouverture rectangulaire 3. Ce jeu est inférieur au millimètre et est de préférence compris entre 1 et 3 dixième de millimètre).

De cette façon, il est possible de monter l'enrouleur 10 sur le plateau 2 par un simple mouvement de translation vertical. Lors de ce mouvement, la dent d'accrochage 25 de chaque crochet 23 s'engager au travers de l'ouverture rectangulaire 3 correspondante du plateau 2. Puis, lorsque la platine 21 de la semelle 20 de l'enrouleur 10 arrive en appui contre le plateau 2, chaque crochet 23 se retrouve engagé dans son ouverture rectangulaire 23 avec un jeu très réduit, ce qui assure un positionnement très précis de la platine 21 sur le plateau 2. Dans cette position, l'enrouleur 10 est prêt à être fixé par la vis de fixation 30.

En pratique, les crochets 23 sont formés avec la platine 21, par découpe et pliage d'un feuillard métallique. Les crochets 23 sont repliés par rapport à la platine 21 lors de l'opération de pliage, à angle droit vers le bas. Chaque crochet 23 présente ainsi deux faces planes.

Avantageusement, les bords 241, 242 des jambages 24 présentent des formes particulières permettant d'amener la platine 21 dans la position souhaitée sans que l'opérateur n'ait à exercer de mouvements particuliers autres que le simple mouvement de translation vertical précité.

Plus précisément, comme le montrent les figures 6 et 7, un premier bord 241 de chaque jambage 24 présente une forme droite. Ce premier bord 241 s'étend selon un premier axe A3 orthogonal au plan de la platine 21.

L'autre bord 242 est, au moins en partie, incliné par rapport au premier bord 241 de telle sorte que le jambage 24 s'élargit depuis la dent d'accrochage 25 vers la platine 21.

En pratique, cet autre bord 242 présente, du côté de la platine 21, une première partie 242A qui s'étend de façon rectiligne, en parallèle du premier axe A3. Il présente en outre, du côté de la dent d'accrochage 25, une troisième partie 242C qui s'étend de façon rectiligne, en parallèle du premier axe A3.

Il présente enfin, entre ces première et troisième parties, une seconde partie 242B rectiligne et inclinée par rapport au premier axe A3. L'angle d'inclinaison est de préférence compris entre 20 et 70 degrés. Il est ici égal à 45 degrés.

Comme cela apparaîtra plus clairement à la lecture de la suite de cette description, cette seconde partie 242B forme une sorte de rampe permettant de forcer la platine à coulisser vers l'avant lorsque l'opérateur imprime à l'enrouleur un mouvement vertical pour engager ses crochets 23 au travers des ouvertures rectangulaires 3 du plateau 2.

La dent d'accrochage 25 s'étend pour sa part d'un seul côté du jambage 24. Elle s'étend en pratique en saillie du premier bord 241 du jambage 24.

Elle présente un bord supérieur droit qui est parallèle au plan de la platine 21 et qui est distant de celle-ci d'une distance strictement supérieure à l'épaisseur du plateau.

Elle présente un bord inférieur qui est bombé vers le bas, ce qui permet, lorsque le crochet 23 est rapporté en regard de l'ouverture rectangulaire 3 prévue dans le plateau 2, d'aider l'opérateur à centrer ce crochet 23 dans l'axe de cette ouverture rectangulaire 3.

On peut maintenant décrire en détail la manière selon laquelle l'opérateur doit procéder pour installer l'enrouleur 10 sur le plateau 2.

Tout d'abord, l'opérateur vient placer l'enrouleur 10 au-dessus du plateau 2, de façon à engager les deux crochets 23 dans les deux ouvertures rectangulaires 3 du plateau 2.

Puis il imprime à l'enrouleur 10 un mouvement vertical dirigé vers le bas (par exemple en le relâchant) de façon à ce que les dents d'accrochage 25 des crochets 23 passent au travers de ces ouvertures rectangulaires 3.

Lors de ce mouvement, les secondes parties 242B des bords 242 des jambages 24, dont on rappelle qu'elles forment des rampes, viennent s'appuyer contre les bords arrière des ouvertures rectangulaires 3. Cet appui force alors l'enrouleur 10 à se déplacer l'avant, ce qui permet aux dents d'accrochage 25 de se retrouver sous le plateau 2 (de manière décalée par rapport aux ouvertures rectangulaires 3).

Puis, l'enrouleur 10 s'immobilise lorsque la platine 21 s'applique contre le plateau 2.

Dans cette position, l'opérateur peut venir visser par le dessous du plateau 2 la vis de fixation 30. Lors de cette opération, la platine 21 est retenue proche du plateau 2 (elle ne peut pas se soulever exagérément) grâce aux dents d'accrochage 25 qui s'accrochent au plateau 2.

A la fin du vissage de la vis de fixation 30 au couple souhaité (ce couple est élevé), la platine 21 vient s'appliquer à nouveau contre la plateau 2, dans une position angulaire (autour d'un axe vertical) correspondant exactement à la position angulaire souhaitée, grâce aux jambages 24 qui sont bloqués avec un jeu très réduit dans les ouvertures rectangulaires 3.

La présente invention n'est nullement limitée au mode de réalisation décrit et représenté, mais l'homme du métier saura y apporter toute variante conforme à l'invention.

A titre d'exemple, on pourrait prévoir que l'élément de blocage prévu sur la platine 21 de la semelle 20 soit, non pas un écrou 22, mais un élément différent (par exemple une ouverture permettant l'encliquetage ou le rivetage de l'enrouleur sur le plateau 2, ou encore un alésage permettant la fixation de l'enrouleur au moyen d'une vis quart-de-tour...).

## Revendications

1. Semelle (20) d'enrouleur de ceinture de sécurité (10) comportant :
- une platine (21) présentant une face adaptée à être rapportée contre une partie (2) de châssis de véhicule automobile,
- un élément de fixation (22) prévu pour permettre la fixation de la platine (21) à ladite partie (2) de châssis de véhicule automobile, et
- au moins un crochet (23) comprenant un jambage (24) qui s'étend en saillie de ladite face de la platine (21) et qui porte une dent d'accrochage (25) située à distance de la platine (21),
**caractérisée en ce que** la liaison entre la platine (21) et le jambage (24) s'étend sur une longueur (ℓ2) supérieure ou égale à la plus grande longueur (ℓ1) du crochet (23) au niveau de la dent d'accrochage (25), lesdites longueurs (ℓ1, ℓ2) étant mesurées selon des axes (A1, A2) parallèles.

2. Semelle (20) selon la revendication précédente, dans lequel la longueur (ℓ2) de la liaison entre la platine (21) et le jambage (24) est égale, à 10% près, à la plus grande longueur (ℓ1) du crochet (23) au niveau de la dent d'accrochage (25).

3. Semelle (20) selon l'une des revendications précédentes, dans lequel le jambage (24) est délimité entre deux bords (241, 242), dont l'un au moins est incliné par rapport à l'autre de telle sorte que le jambage (24) s'élargit depuis la dent d'accrochage (25) vers la platine (21).

4. Semelle (20) selon la revendication précédente, dans lequel une partie au moins du bord incliné s'étend de façon rectiligne.

5. Semelle (20) selon l'une des revendications précédentes, dans lequel il est prévu deux crochets (23) identiques, situés en parallèle l'un de l'autre, de part et d'autre de l'élément de fixation (22).

6. Semelle (20) selon l'une des revendications précédentes, dans lequel chaque crochet (23) vient de formation d'une seule pièce avec la platine (21), par découpe et pliage d'un feuillard métallique.

7. Semelle (20) selon l'une des revendications précédentes, dans lequel ledit élément de fixation est un écrou (22), qui est préférentiellement soudé sur la platine (21).

8. Enrouleur (10) comportant un mécanisme d'enroulement de ceinture de sécurité (12) qui est logé dans un boîtier (11) comprenant une semelle (20) conforme à l'une des revendications précédentes.

9. Véhicule automobile (1) comportant :
- un châssis qui est équipé d'un plateau (2) présentant un orifice (4) et au moins une ouverture (3),
- un enrouleur (10) conforme à la revendication précédente, dont le crochet (23) de la semelle (20) est engagé au travers de l'ouverture (3) du plateau (2), et
- un moyen de blocage (30) enfilé au travers de l'orifice (4) du plateau (2) et coopérant avec l'élément de fixation (22) de la semelle (20) de l'enrouleur (10) de façon à fixer la semelle (20) au plateau (2),
dans lequel l'ouverture (4) présente une longueur (ℓ3) égale, au jeu de montage près, à la longueur (ℓ2) de la liaison entre la platine (21) et le jambage (24) de la semelle (20).

10. Véhicule automobile (1) selon la revendication précédente, comportant une rangée de sièges avant et une rangée de sièges arrière, et dans lequel le plateau (2) est prévu à l'arrière de la rangée de sièges arrière.

## Patentansprüche

1. Grundplatte (20) eines Sicherheitsgurtaufrollers (10), welche aufweist:
- eine Platte (21), die eine Seite aufweist, die dazu eingerichtet ist, an einem Teil (2) eines Rahmens eines Kraftfahrzeugs angebracht zu werden,
- ein Befestigungselement (22), das dazu vorgesehen ist, die Befestigung der Platte (21) an dem Teil (2) eines Rahmens eines Kraftfahrzeugs zu ermöglichen, und
- mindestens einen Haken (23), der einen Schenkel (24) umfasst, welcher sich von der Seite der Platte (21) aus vorstehend erstreckt und welcher einen Einhakzahn (25) trägt, der von der Platte (21) entfernt angeordnet ist, **dadurch gekennzeichnet, dass** sich die Verbindung zwischen der Platte (21) und dem Schenkel (24) über eine Länge (*l*2) erstreckt, die größer oder gleich der größeren Länge (*l*1) des Hakens (23) am Einhakzahn (25) ist, wobei die Länge (*l*1, *l*2) entlang paralleler Achsen (A1, A2) gemessen werden.

2. Grundplatte (20) nach dem vorhergehenden Anspruch, wobei die Länge (*l*2) der Verbindung zwischen der Platte (21) und dem Schenkel (24) bis auf 10 % gleich der größeren Länge (*l*1) des Hakens (23) am Einhakzahn (25) ist.

3. Grundplatte (20) nach einem der vorhergehenden Ansprüche, wobei der Schenkel (24) zwischen zwei Rändern (241, 242) begrenzt ist, von denen wenigstens einer in Bezug auf den anderen so geneigt ist, dass sich der Schenkel (24) vom Einhakzahn (25) in Richtung der Platte (21) verbreitert.

4. Grundplatte (20) nach dem vorhergehenden Anspruch, wobei sich wenigstens ein Teil des geneigten Randes geradlinig erstreckt.

5. Grundplatte (20) nach einem der vorhergehenden Ansprüche, wobei zwei identische Haken (23) vorgesehen sind, die parallel zueinander beiderseits des Befestigungselements (22) angeordnet sind.

6. Grundplatte (20) nach einem der vorhergehenden Ansprüche, wobei jeder Haken (23) mit der Platte (21) aus einem Stück ausgebildet ist, durch Zuschneiden und Biegen eines Metallbleches.

7. Grundplatte (20) nach einem der vorhergehenden Ansprüche, wobei das Befestigungselement (22) eine Mutter ist, welche vorzugsweise an die Platte (21) angeschweißt ist.

8. Gurtaufroller (10), der einen Aufrollmechanismus für einen Sicherheitsgurt (12) aufweist, welcher in einem Gehäuse (11) aufgenommen ist, das eine Grundplatte (20) gemäß einem der vorhergehenden Ansprüche umfasst.

9. Kraftfahrzeug (1), welches aufweist:
- einen Rahmen, welcher mit einer Plattform (2) ausgestattet ist, die einen Durchlass (4) und wenigstens eine Öffnung (3) aufweist;
- einen Gurtaufroller (10) gemäß dem vorhergehenden Anspruch, dessen Haken (23) der Grundplatte (20) durch die Öffnung (3) der Plattform (2) hindurch eingesetzt ist, und
- ein Verriegelungsmittel (30), das durch den Durchlass (4) der Plattform (2) hindurchgeführt ist und mit dem Befestigungselement (22) der Grundplatte (20) des Gurtaufrollers (10) so zusammenwirkt, dass die Grundplatte (20) an der Plattform (2) befestigt wird, wobei die Öffnung (4) eine Länge (*l*3) aufweist, die bis auf das Montagespiel gleich der Länge (*l*2) der Verbindung zwischen der Platte (21) und dem Schenkel (24) der Grundplatte (20) ist.

10. Kraftfahrzeug (1) nach dem vorhergehenden Anspruch, welches eine vordere Reihe von Sitzen und eine hintere Reihe von Sitzen aufweist, und wobei der Plattform (2) auf der Rückseite der hinteren Reihe von Sitzen vorgesehen ist.

## Claims

1. Baseplate (20) of a safety belt retractor (10), comprising:
- a mounting plate (21) having a face designed to be attached against a motor vehicle chassis part (2),
- a fixing element (22) intended to allow the mounting plate (21) to be fixed to said motor vehicle chassis part (2), and
- at least one hook (23) comprising a leg (24) which projects from said face of the mounting plate (21) and which bears a fastening tooth (25) situated at a distance from the mounting plate (21),
**characterized in that** the connection between the mounting plate (21) and the leg (24) extends over a length (ℓ2) greater than or equal to the greatest length (ℓ1) of the hook (23) at the fastening tooth (25), said lengths (ℓ1, ℓ2) being measured along parallel axes (A1, A2).

2. Baseplate (20) according to the preceding claim, wherein the length (ℓ2) of the connection between the mounting plate (21) and the leg (24) is equal, to within 10%, to the greatest length (ℓ1) of the hook (23) at the fastening tooth (25).

3. Baseplate (20) according to either of the preceding claims, wherein the leg (24) is delimited between two edges (241, 242), at least one of which is inclined with respect to the other in such a way that the leg (24) widens from the fastening tooth (25) towards the mounting plate (21).

4. Baseplate (20) according to the preceding claim, wherein at least part of the inclined edge extends rectilinearly.

5. Baseplate (20) according to one of the preceding claims, wherein there are provided two identical hooks (23), which are situated parallel to one another, on either side of the fixing element (22).

6. Baseplate (20) according to one of the preceding claims, wherein each hook (23) is formed in one piece with the mounting plate (21), by cutting and folding a metal strip.

7. Baseplate (20) according to one of the preceding claims, wherein said fixing element is a nut (22), which is preferably welded to the mounting plate (21).

8. Retractor (10) comprising a mechanism for winding a safety belt (12) that is accommodated in a housing (11) comprising a baseplate (20) according to one of the preceding claims.

9. Motor vehicle (1) comprising:
- a chassis which is equipped with a platform (2) having an orifice (4) and at least one opening (3),
- a retractor (10) according to the preceding claim, the hook (23) of the baseplate (22) of which is engaged through the opening (3) of the platform (2), and
- a blocking means (30) fitted through the orifice (4) in the platform (2) and cooperating with the fixing element (22) of the baseplate (20) of the retractor (10) so as to fix the baseplate (20) to the platform (2),
wherein the opening (4) has a length (ℓ3) equal, to within the mounting clearance, to the length (ℓ2) of the connection between the mounting plate (21) and the leg (24) of the baseplate (20).

10. Motor vehicle (1) according to the preceding claim, comprising a front row of seats and a rear row of seats, and wherein the platform (2) is provided to the rear of the rear row of seats.
